# EUROPEAN PATENT SPECIFICATION

(11) **EP 2 802 205 B1**
(45) Date of publication and mention of the grant of the patent: **05.10.2016**
(21) Application number: 12701842.2
(22) Date of filing: 11.01.2012
(51) Int. Cl.: A01K 11/00

(54) **ANIMAL EAR TAG HOLDER**
TIEROHRMARKENHALTER
SUPPORT POUR ÉTIQUETTES D'OREILLES POUR ANIMAUX

(43) Date of publication of application: 19.11.2014
(73) Proprietor: Datamars SA, 6930 Bedano (CH)
(72) Inventor: QUARRY, Antony, CH-6987 Caslano (CH); VILASECA, Joan-Francesc, Canillo (AD); PACHOUD, Damien, CH-6963 Pregassona (CH)
(74) Representative: Zardi, Marco
(86) International application number: PCT/EP2012/050328
(87) International publication number: WO 2013/104415

(56) References cited:
- EP-A2- 2 223 591
- WO-A2-2008/044219

## Description

### Field of application

The present invention relates to an animal ear tag holder comprising a casing for stocking a plurality of tags to be extracted with a tool that is also used for applying the tag to the animal ear. The tool is for example a pincer for picking one tag at a time from the tag holder and for applying the picked tag to a target to be tagged, i.e. an animal such as a sheep or a cow. More particularly, the present invention relates to a portable animal ear tag holder.

The present invention further relates to a method for stocking animal ear tags in the tag holder and for picking the animal ear tags from the tag holder, with a tool which is also used for applying the tag to a target, and more particularly to an ear of an animal.

### Prior art

As known, an animal ear tag holder comprises a casing wherein a plurality of animal ear tags are stocked and from which each tag can be easily taken for a fast application to a target, for example to an ear of an animal. One problem of the prior art tag holder is that the tag cannot be picked directly with the tool that is used for applying the tag to the animal but is first taken by hand, manually applied to the tool and then applied to the target; thus, a lot of time is required to tag several targets, especially when the target is an animal which may move while an operator is busy taking the tags from the tag holder or for charging the tool. The tool is for example a pincer for picking one animal ear tag at a time from the tag holder.

WO 2008/044219 describes a prior art ear marking arrangement for improving the stocking of tags and their picking with a tool. More particularly, the arrangement comprises a number of first and second ear tag parts of an ear tag, a tool for assembling a first and second ear tag part on an ear of an animal, a first and second tool holder of the tool for holding the first and second tag parts in a mutual position in which they are ready to be assembled on the ear of the animal, and a magazine for storing a number of ear tag parts. The magazine comprises a number of first magazine holders for holding a first ear tag part, a number of second magazine holders for holding a second ear tag part; the first and second magazine holders are grouped in pairs and each pair of magazine holders is adapted to hold a first and second tag part in mutual positions corresponding to the mutual positions of a first and second tag part received in the first and second tool holder.

Such marking arrangement helps the operator, since the animals can successively be ear marked without manually inserting the tag parts one after another in the tool but extracting it with a tool for detaching and picking the tags.

However, this marking arrangement suffers other disadvantages, for example due to the fact that, a magazine holding several tag parts have notable dimension, due to the arrangement of the tag parts in rows and columns, and thus it is not practical to be carried around by the operator or moved. Moreover, to recharge the magazine, a burdensome operation is required, consisting of a manual insertion of a plurality of first and second tag parts in the respective magazine holders.

WO2011007150 discloses an applicator system comprising an applicator and a removable magazine loaded with individual animal identification tags; the magazine is inserted into the applicator, in a magazine support. More particularly, the magazine may be loaded with individual animal identification tags which are arranged in line in a channel running along the length of the magazine; such individual tags are folded over so that a protruding male portion is touching a female portion, although not actually engaged with it.

This applicator system facilitates the operation of tagging animals because the applicator is already loaded with several tags. However, the "in line" arrangement of tags in the magazine support limits the number of tags which may be effectively loaded in the applicator and the manageability of the applicator. The applicator is not easy to be handled, especially when the magazine is full, since the weight of the applicator is increased by the tags aboard. Furthermore, once the tags have been applied to the animals, a lot of time is required to recharge the magazine.

Another prior art applicator, disclosed in WO20080759741, includes an applicator body, adapted to receive a strip of longitudinally connected tags, and transporting means to engage with the strip of tags and to move the strip longitudinally relative to the applicator body, for positioning a front-most tag of the strip at a dispensing position. Dispensing means are further provided in the applicator, to engage with the front-most tag, to separate it from the next adjacent tag in the strip, and to secure it about an ear of an animal. Once the "front-most" tag has been attached to the animal, the transporting means re-engage the strip to move the "next front-most" tag to the dispensing position.

Also in this case, the "in line" arrangement of tags limits the number of tags which may be loaded in the applicator body and the manageability of the applicator, not only due to the length of the applicator body which is used as a magazine for tags but also for the weight of the applicator, especially when such magazine is full of tags. Also in this case, additional time is required to recharge the magazine.

The problem at the base of the present invention is how to provide a tag holder for stocking a plurality of tags in a small space, allowing the operator to carry the tag holder while working and also to easily extract one tag with a pincer, the tag holder being also easily and quickly rechargeable with a plurality of tags, substantially with one single operation of recharge, overcoming the limitations and problem currently affecting the known tag holder.

### Summary of the invention

The idea of solution at the base of the present invention is to provide an animal ear tag holder according to claim 1, wherein stocking a plurality of tags arranged on a cartridge belt or tape, which may be advantageously wrapped in coils for stocking more tags in a small space, the tag holder comprising a framed window wherein a single tag may be arranged. By pulling the tape out from the holder, the tag may be picked, inserting a tool or pincer in the framed window to take the tag. Advantageously, an animal ear tag holder of small size stocks several tags detachably attached on the tape and may be carried around by an operator, while working; the coupling of the tape to a plurality of tags is made automatically, preferably during the manufacturing process of the tags and before their singling out.

The coupling between tags and tape may be made with adhesive means or mechanical means. For example, according to an embodiment of the invention, a glue may be provided between the tape and the tags, for detachably holding the tags. In this respect, the tape may be adhesively coupled to a plurality of tags which are manufactured aligned in parallel and connected to two plastic strips through plastic filaments, one filament connecting one terminal portion of the tag to a strip and the other filament connecting the counter posed portion to the other strip. The adhesive may be applied before coupling the tape to the tags, disposed on the tape, on the tags or on both the parts; after the adhesive coupling, the plastic filaments are cut out, so that each tag may be separately detached from the tape, ungluing the tag through the tool.

According to another embodiment, mechanical fixation means for detachably holding the tags may be arranged or formed on the tape. For example, the tape may be a length of thermoformed plastic blister in roll form including retaining elements, for instance couples of tooth, each couple of tooth retaining one tag. More particularly, the couples of tooth are equally distanced along the tape; this arrangement is advantageous because the tape may be mechanical coupled in a single step to a plurality of tags which are manufactured aligned in parallel and connected equally distanced to the plastic strips, substantially as already described above: one filament connects one terminal portion of the tag to a plastic strip and the another filament connects the counter posed portion to the other strip. After the mechanical coupling, the plastic filaments are cut out, so that each tag may be separately detached from the tape, disengaging it from the respective tooth, through the tool.

According to this idea of solution, the technical problem is solved by a tag holder comprising a casing for stocking a plurality of tags which are detachably fixed onto a tape or belt and a framed window arranged to frame a tag extracted from the casing for detaching from the tape.

A fasten block is coupled to the framed window to form a slot, intended to receive the tape for a guided extraction from the casing. The framed window further forms a guide for a tool used for detaching and picking said tag from the tape.

Advantageously, picking a tag with a tool is very easy and fast because the framed window guides the tool and this last easily couples to the tag, in fact, the tag is maintained in the right position within the window through the guide of the fastening block on the tape and an indexing stop on the window. When a tag is picked, a following tag can be easily placed in the right position to be detached from the tape, simply pulling out by hand an end of the tape from the tag holder. Preferably, but not exclusively, the cartridge belt or tape is a paper strip which may be broken or cut manually, when extracted from the casing.

According to an embodiment of the invention, the fasten block forms, at a middle height of the framed window, a stop element for a central portion of the tag. More particularly, the central portion of the tag is retained by the fasten block while arms of the tools are inserted through free apertures of the framed window, to contact counter posed distal portions of said tag, pushing such portions backwards until they engage with the arms. Advantageously, such arrangement of the fasten block, allows a flexion of the tags around its central portion while the arms exert a pressure on the terminal portions of the tag, for engaging them, and improves such engagement which occurs when the tag is partially folded on itself.

In an aspect of the invention, the framed window is associated with an outer and opened portion of the casing and a first frame side of the window is spaced from the fasten block to receive the tag to be detached together with the tape from the outer and opened portion of the casing, when the tape is pulled, and a second frame side is spaced from the fasten block to hold the tape, when the corresponding tag is already detached. Thus, a piece of the tape, no more holding tags to be extracted, projects out from the slot and may be cut.

In one embodiment, a holding block is formed with a thickened portion of the second frame side which is coupled to the fastening block at a distance suitable for blocking the tape between holding block and fastening block and for holding the tape in position within the framed window. In another embodiment, the holding block is formed with a thickened portion of the fastening block coupled to the second frame side at a said distance.

In another aspect of the invention, the casing is a substantially hollow cylindrical box having a top aperture to receive the tags, for recharge, and comprises a spindle around which the tape rolls up; the framed window and the fasten block project outside a rounded surface of the box delimiting the outer and opened portion above cited. The tape with tags may be previously wrapped around a disposable tube to fit on the spindle; such a coupling is really fast, because the tape is already provided coiled. The tape may also be directly rolled up around the spindle, forming the coils of tags; this is advantageous because an operator may roll up the tape clock wise or counter clock wise and inserting the end of the tape in the framed window, depending on his preferred unroll sense; the applicant has noted that a left-handed prefers to unroll the tape through the framed window in a contrary sense with respect to a right-handed, since the former carries the tag holder with the right hand and unrolls and uses the pincer with the left hand while the latter carries the tag holder with the left hand and unrolls and uses the pincer with the right hand.

In a preferred embodiment, lateral side of the cylindrical box is partially opened towards the top aperture. Advantageously, this shape of the tag holder, with an opening interesting not only the top of the cylindrical box but also the lateral side of the cylindrical box, facilitates the recharging operations of the tape inside the casing, but also the insertion of the tape over the spindle and into the slot. In the above embodiment, the fasten block is formed on or fixed to a portion of the lateral surface of the cylindrical box which is below the opened lateral portion, preferably radially projecting outside such portion. Advantageously, such an animal tag holder may be manufactured from a substantially tubular element which is closed on one side, counter posed to the top aperture, and which is partially cut out on a lateral side, delimiting the lateral opened portion. The fastener block is applied on the lateral surface, below the lateral opened portion and the framed window is applied projecting outside from the tubular element, near the lateral opened portion. One or more parts of the tag holder may be formed in one single block, for example obtained for injection molding, in particular a block including the casing and the framed window.

In a preferred embodiment, at least an internal portion of the casing which ends in the outer and opened portion is more curved than the remaining portion of the cylindrical box, to guide the tape within the slot, when pulled. The curved portion prevents the tape with tags from blocking and facilitates its extraction.

Preferably, two separate framed windows may be provided to receive the tape, respectively, for a clockwise or counter clockwise extraction from the casing. The separate windows are preferably overlooking and associate to the same fasten block. Such arrangement of windows is advantageous because it facilitates the use to left-hands and right-hands.

The separate frame windows are spaced at a predetermined distance one from the other, preferably by means of the fasten block and preferably to a distance at least corresponding to half a length of the tag. In this aspect of the invention, the arms of the tool may be received from counter posed apertures of the framed windows, and the tag may be bent around its central portion, pushing the arms on the counter posed terminal portions of the tag. The tag holder is substantially symmetrical to a plane passing through the center of the cylindrical box and between the framed windows, parallel.

An adjustable belt fixed to the casing and having ending portions to be connected is preferably included in the tag holder, to fix it around a user's waist.

In an embodiment of the invention, more than one casing are stacked and associated to respective framed windows and fasten blocks for a guided extraction of more than one tape of a corresponding plurality of tags, preferably each tape attaching a distinguished type of tag. A tag holder with a stacked arrangement is really useful when the operator has to apply different kinds of tags, for example two different tags on each ears of a sheep.

The technical problem described above is also solved by a tag assembly, comprising the tag holder described above, a tape detachably fixing a plurality of tags and a tool for detaching the tags from the tape, wherein the arms of the tools have a same size substantially corresponding to a size of the window. The tape is wrapped around the spindle in a plurality of coils and an end of the tape free from tags is inserted within the slot of the tag holder. The tags are attached to the tape with glue disposed on the tape and/or on the tags or can be mechanically fixed; the tape is for example a thermoformed plastic material.

The technical problem described above is also solved by a method for stocking tags in the tag holder previously described. The tags are manufactured with an injection process ending in a plurality of tags aligned in parallel and connected to two plastic strips through plastic filaments, one filament connecting one terminal portion of the tag to a strip and the other filament connecting the counter posed portion to the other strip. The tag is flexible and the counter posed terminal portions are molded to be closed one on the other with a tool having two arms adapted to pick such portions and to fold the tag.

A tape or cartridge belt is attached to the plurality of tags aligned in parallel and connected to the strips. The tape or cartridge belt has a predetermined width; in an aspect of the invention, such width substantially corresponds to a length of a curved middle section of the tag which is formed after the tag is detached from the tape and closed with its counter posed terminal ends engaged one with the other. According to an embodiment of the invention, the tape is previously covered with glue; in another embodiment, the back of the tags is covered with glue; in a further embodiment, the tags are clipped into a thermoformed plastic strip or blister.

In all these embodiments, a tape detachably fixing the tabs is provided. All the filaments of the tags and the two strips are cut out in one single step, preferably with a blade. The resulting tape with a plurality of parallel aligned tags, separated one from the other, is rolled up around the spindle of the tabs holder, through the top aperture of the casing, and wrapped on itself. An end of the tape, free from tags, is inserted through the open aperture of the casing and passed through the slot formed by the fasten block and the framed window, ready to be pulled outward from the casing, to place a tag to be detached within the framed window. Thus, the arms of the tool may be inserted through the windows, coupling its counter posed terminal portions, and pushed through the guide formed by the framed window to bend the tag around the central portion of the fastening element. When the bending of the tag reach a predetermined curvature, the counter posed terminal portion engage the arms of the tool which can be retracted from the window to detach the tag from the tape and extract it from the tag holder.

The end of the tape may be pulled outside from the tag holder, for positioning another tag to be extracted within the framed window. Preferably, the tape is paper and may be cut by hands.

Further advantageous features of the tag holder and arrangement according to the invention are reported in the description below given with reference to the attached drawings which are given only for exemplificative purpose and without limiting the scope of protection of the invention.

### Brief description of the drawings

Figure 1 represents, in a perspective view, the tag holder, according to the present invention.
Figure 2 represents, in another perspective view, the tag holder, according to the present invention.
Figure 3 represents, in a perspective view, a tape detachably attaching tags, according to the present invention.
Figure 4 represents, in a perspective view, the tag holder of figure 1 comprising the tape of figure 3, and a tool for detaching the tags, according to the present invention.
Figure 5 represents, in a perspective view, a tape with tags, according to the present invention.
Figures 6a-6c are magnified views representing details of the tag holder of figure 1.

### Detailed description

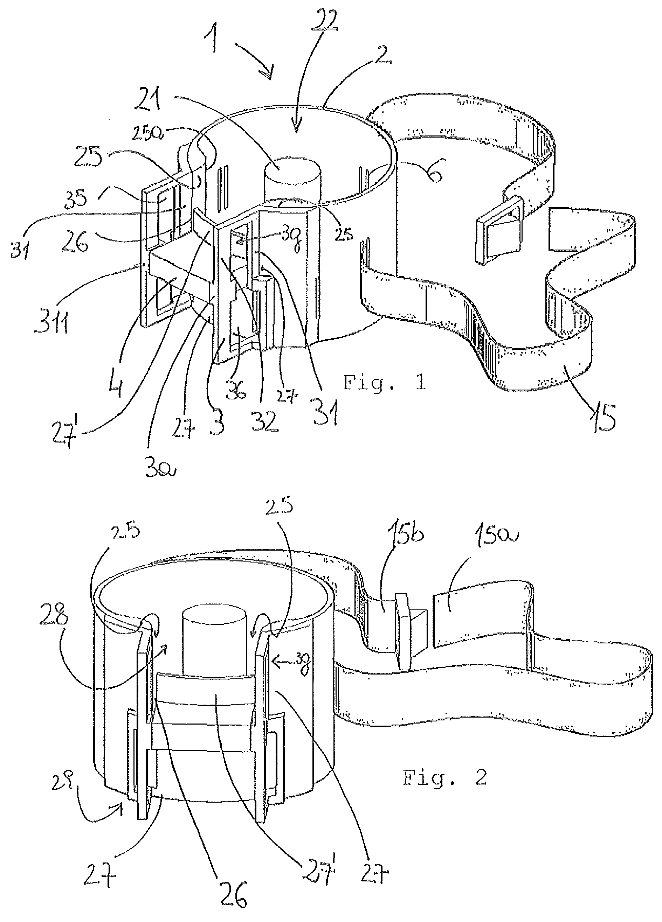

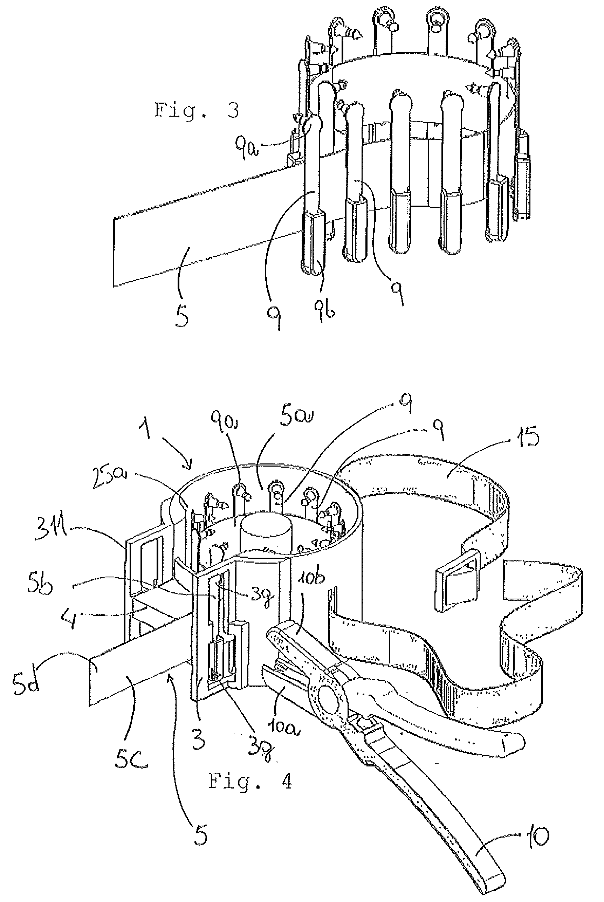

With reference to figures 1-4, a tag holder according to the present invention is schematically represented and globally indicated with numeral reference 1, and comprises a casing 2 intended to stock a plurality of tags 9 which are arranged on a tape 5 to be detached, in a pre-defined sequence.

The tape is a flexible support for the tags, with no limitation to its material or to the means for detachably attaching the tags. For example, the coupling between tags 9 and tape 5 may be an adhesive coupling. In an embodiment of the invention, a glue may be provided between the tape 5 and the tags 9, for detachably holding the tags 9. Preferably, a plurality of tags 9 which are manufactured aligned in parallel and connected to two plastic strips through plastic filaments, are adhesively coupled to the tape in one single step; the adhesive may be disposed on the tape side, on the tags or both on the tape and on the tags; after the tape is coupled to the plurality of tags, the plastic filaments are cut out, so that each tag may be separately detached from the tape, ungluing it using the tool.

Preferably, according to this embodiment of the invention, the tape may be a paper support and the adhesive may be a thin film of glue; in another embodiment of the invention, the tape may be a non adhesive paper support and an adhesive glue or film is disposed only on the back of each tag to be detachably attached to the paper tape. The tape is advantageously wrapped in a plurality of coils to support a plurality of tags.

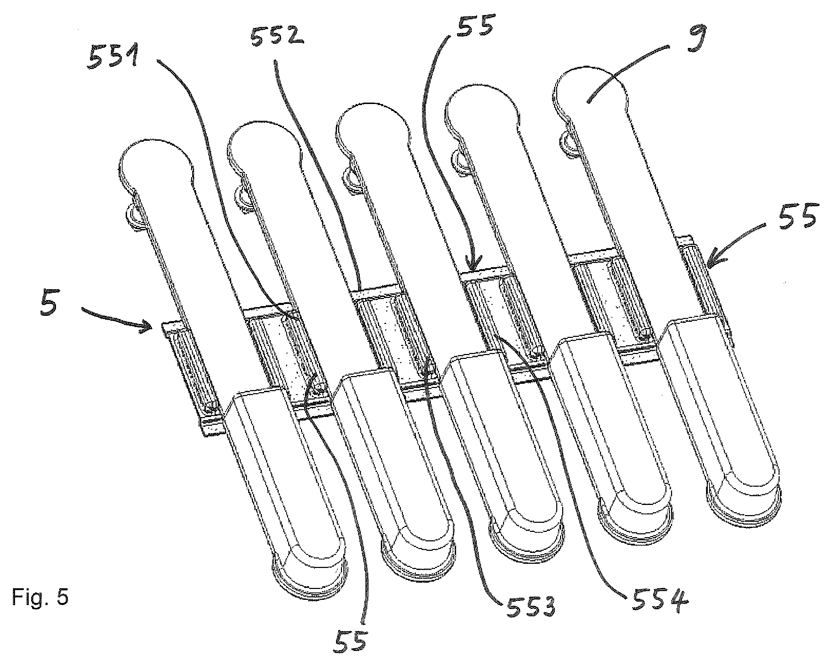

According to another embodiment, mechanical fixation means for detachably holding the tags are arranged on the tape. With reference to figure 5, the tape 5 may be a length of thermoformed plastic blister in roll form including retaining elements 55. For instance each retaining element 55 includes a couple of tooth 551, 552 - 553, 554 for retaining a tag 9. The couples of tooth 551, 552 - 553, 554 are equally distanced on the tape 5 so that the tape 5 may be mechanical coupled, in one single step, to a plurality of tags 9 placed on a strip, at equal distance, during the manufacturing process of the tags. In this respect, the tags are manufactured, for instance for injection molding, aligned in parallel and connected at equal distance to the plastic strips through plastic filaments, one filament connecting one terminal portion of the tag to a strip and the other filament connecting the counter posed portion to the other strip.

According to this embodiment of the invention, the tags can be easily clipped in and mechanically retained onto the thermoformed plastic blister. The mechanical coupling between tags 9 and tape 5 is fast because each tag 9 of the plastic strip may be coupled to a respective couple of tooth 551, 552. After the mechanical coupling, the plastic filaments are cut out, so that each tag may be separately detached from the tape, disengaging it from the respective tooth.

The casing 2 has an aperture 25 from which the tape is extracted, substantially pulling an end 5d of the tape free from the tags or a portion 5c of the tape already extracted from the casing and from which the tags have been already detached. A framed window 3 of the tag holder 1 is arranged with respect to the casing 2 to frame a tag when it is extracted from the casing to be detached from the tape; thus, in use, some tags are stocked within the casing 2, attached on a portion 5a of the tape 5, one single tag is framed in the framed window 3 to be detached from a tape portion 5b, and the tape portion 5c, wherefrom the tags have been already detached, is outside the casing; this last may be advantageously cut. In an embodiment, the tape is in biodegradable material so that the tape portions 5c may be dropped on the ground, when cut. In a preferred embodiment, a size of the window is equal to a size of the tag. In a further preferred embodiment, the framed window is substantially perpendicular to the casing, this last being preferably cylindrical; the tape is rolled up within the casing and unrolled out, while it is pulled outside the casing, substantially in contact with the framed window.

In this respect, a fasten block 4 is coupled to the framed window 3 to form a slot 26, intended to receive the tape for a guided extraction from the casing 2. The framed window further forms a guide 3g for a tool 10 for detaching and picking the tag 9 from the tape portion 5b. Preferably, the width of the slot 26 is substantially equal to (the sum of) the width of the tag 9 and the tape 5. When a tag is pulled into the window with the free end of the tape, an indexing stop 3b stops the tag in the correct position. Preferably, also the window has an aperture substantially equal to a size of the tool, so that the tool inserted through the window matches exactly the tag to be extracted.

In an aspect of the invention, the tag 9 is flexible and is picked on counter posed terminal ends 9a, 9b, matching to counter posed arms 10a, 10b of the tools. More particularly, the fasten block 4 forms, at a middle height of the framed window 3, a stop element for a central portion 9c of the tag.

The central portion 9c is arrested by the fasten block 4 while arms 10a, 10b of the tools are inserted through free apertures 33a, 33b of the framed window, to contact counter posed distal portions of said tag 9a, 9b, pushing such portions backwards until they engage with the arms. Advantageously, such arrangement of the fasten block, allows a bending of the tag around its central portion 9c, due to the pressure exerted by the arms on the terminal portions for engaging them, and simplify such engagement which occurs when the tag is partially folded on itself.

As represented in figure 1 and 2, the framed window is associated to an outer and opened portion 25 of the casing and a first frame side 31 of said window is spaced from the fasten block 4 to form the slot 26 receiving the tag to be detached from the casing 2, when the tape is pulled; a second frame side 32 is spaced from the fasten block 4 to form a holding block 3a, holding the tape from which a tag has been already detached. The holding block 3a comprises the indexing stop 3b blocking the tag in the correct position centrally aligned in the window. More particularly, the block 3a holds the tape stable, avoiding displacement of the tag and tape during use and especially when the tool is introduced through the window for picking the framed tag from the tape.

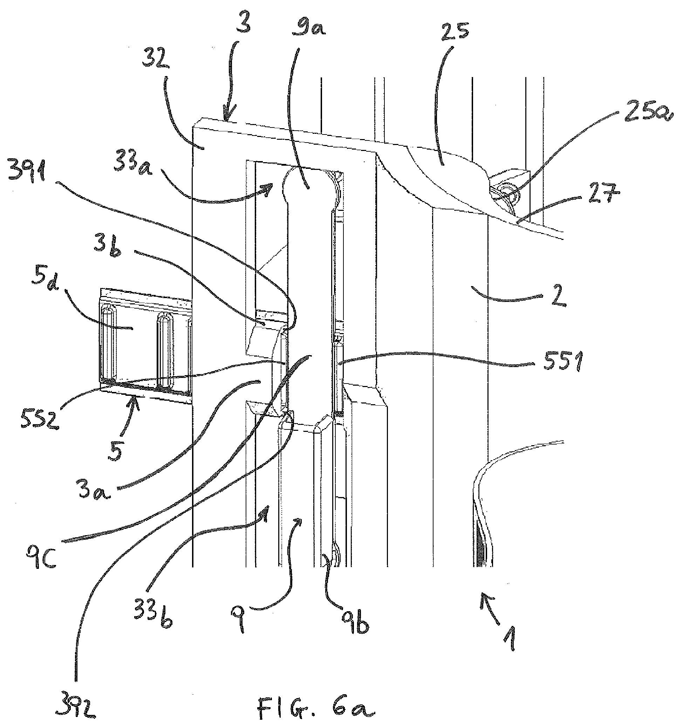

The holding block 3a is preferably formed with a thickening of the second frame side 32. In a preferred embodiment represented in figure 6a-6c, the thickening forms two rails 391, 392 protruding towards the fasten block 4 from the framed window 3 and arranged to receive there between the tape 5 for sliding.

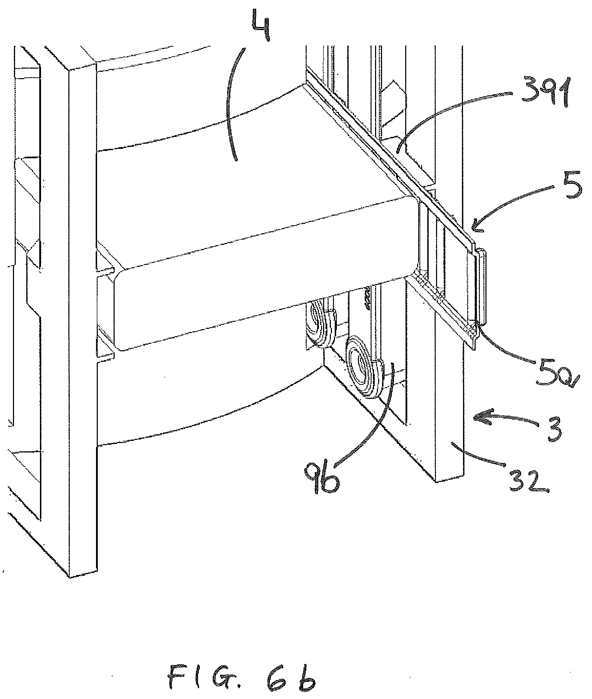

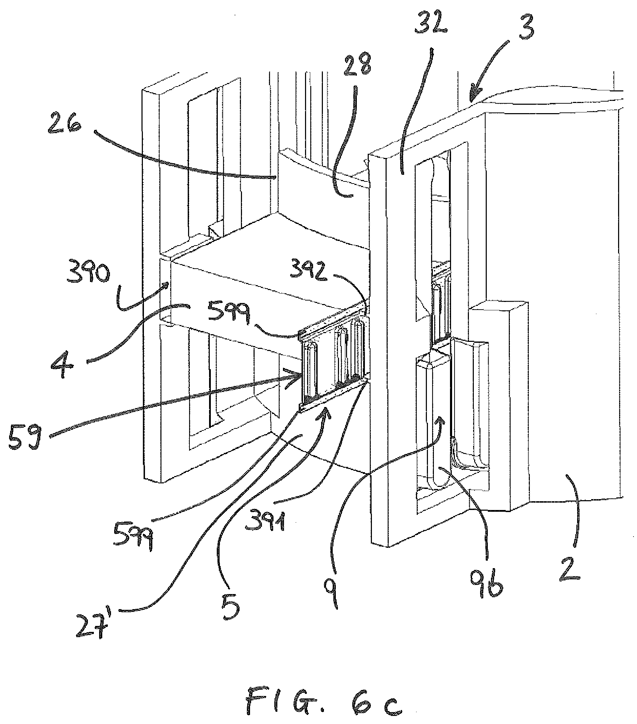

As shown in figure 6b, the tape 5 may be formed with a central band 59 in relief with respect to counter posed borders 599 of the tape; advantageously, according to this embodiment, the fasten block 4 may be arranged to partially enter a track 390 delimited by the rails 391, 392, to engage the central band 59 in relief of the tape, precisely guiding the tape 5 and thus avoiding its displacement while it is pulled. More preferably, the central band 59 of the tape 5 slides within the rails 391, 392 while the borders 599 of the tape 5 slide below the rails 391, 392 (fig. 6c) and outside the fasten block 4.

As shown in figure 6a, the tape 5 may include retaining elements 55, for instance equally distanced couples of tooth 551, 552 for mechanically retaining the tag 9 on the tape 5. The indexing stop 3b of the second frame side 32 is formed by the rails 391, 392 which engage the tooth 552 of the retaining element 55, thus stopping the tape 5 in a position where the tag 9 may be easily and precisely picked by the tools. Of course, while the indexing stop 3b has been described here above in connection with a tape 5 mechanically coupled to the tags, through retaining elements 55, the same arrangement of the indexing stop 3b may be applied to a tape 5 adhesively coupled to the tags 9; for example, the tape 5 may include couples of tooth 551, 552, not having retaining function on the tags but engaging the indexing stop 3b for positioning the tape 5, and an adhesive film or glue may be provided between the tooth 551, 552 to attach the tag. In a further embodiment, a double mechanical and adhesive coupling may be provided between the tape and the tags, for example arranging couples of tooth with retaining function on the tape and applying an adhesive film or glue between the tooth.

Without limiting the scope of the invention, the casing is a substantially hollow cylindrical box having a top aperture 22 to receive the tape with the tags, for recharge, and comprises a spindle 21 around which the tape rolls up; the tape may be also fit on the spindle 21 after being rolled up.

As represented in figure 1 and 2, the framed window and the fasten block project outside a lateral surface 27 of the cylindrical box. The lateral surface 27 includes an opened lateral portion 28 towards the top aperture 22 of the box, for facilitating an introduction of the tape within the slot 26, once the tape has been introduce in the casing through the top aperture 22. The lateral surface 27 includes a cut 26, delimiting the slot 26, through which the tape and the tag pass. The cylindrical box is closed below with a lid 29.

Advantageously, this shape of the tags holder, with an opening interesting not only the top aperture 22 but also a lateral portion 28 of the cylindrical box, facilitates the recharging operations of the tape, the introduction of the tape within the spindle and the slot. In the above embodiment, the fasten block 4 is formed on or fixed to a portion 27' of the lateral surface 27 which is below the opened lateral portion 28, preferably radially projecting outside such portion 27'.

As represented in figure 1, an internal portion 25a of the casing 2, ending in the outer and opened portion 25, is more curved than the remaining internal portion of the cylindrical box. When the end of the tape is pulled to extract a tag from the casing, the portion 5a of the tape slides along the internal surface of the cylindrical box and the portion 5b of the tape follows the internal curvature 25a before entering the framed window 3. The absence of sharp edges in proximity of the outer and opened portion, helps a smoother extraction of the tape from the casing.

Advantageously, the tag holder also comprises a belt 15 connected to the casing and having ending portions 15a, 15b to be connected for wearing the tag holder 1. In this way, an operator may transport the tag holder 1 having his hands free to work; when a tag is needed he takes the end of the tape with one hand, he pulls the tape and then he takes the tool to detach the tag.

According to an aspect of the present invention, in order to simplify the detachment of tags both for left handlers, who generally get the tool in their left hand, and for right handlers, generally using the tool in their right hand, the tag holder comprises two separate framed windows 3, 311, adapted to receive the tape, respectively, for a clockwise or counter clockwise extraction from the casing. For instance, the separate windows are overlooking and associate to the same fasten block, as represented in the perspective view of figure 1 and 2.

Also a space between the frame windows is predetermined; in this respect, the fasten block 4 may be used as a spaced between the framed windows. Preferably, the spacer has a size at least equal to half a length of the tag; this arrangement of the spacer allows to receive, both, from the aperture 35 of the framed window 3 or from the aperture 36 of the framed window 311, the tool 10, so that the arms of the tool are pushed against the counter posed terminal portions 9a, 9b of the tag, inflecting the tag around its central portion which is held against the fasten block 4. When the bending of the tag reaches a predetermined curvature, the counter posed terminal portions engage the arms of the tool which can be retracted from the framed window to detach the tag from the tape and extract it from the tag holder.

In another embodiment of the present invention, the tag holder is structured to stock different kind of tags. This is very useful when the operator must choose a specific tag before attaching it to the target, for example one tag for the left ear of an animal and another tag for the right ear of the animal. In this respect, the tag holder 1 of the invention comprises more than one casing which are stacked one over the other; each casing is associated to a respective framed window or framed windows and to a fasten block for a guided extraction of corresponding more than one tapes attaching a corresponding plurality of tags. Advantageously, each tape attaches a distinguished type of tags.

The problem at the base of the present invention is also solved by an arrangement or assembly according to claim 13, comprising a tag holder of the type described above, a tape detachably fixing a plurality of tags and a tool for detaching the tags from the tape. As already described, the arms of the tools have substantially a same size of the window. The tape is wrapped on the spindle of the holder 1 on a plurality of coils and an end of the tape free from tags is inserted within the slot of the holder to be pulled. The tags are attached to the tape with a glue disposed on the tape and/or the tags. As already explained, different means for detachably attaching the tags may be provided.

Advantageously, according to the invention, the tag holder stocks a plurality of tags in a small space, since the tape is wrapped around a spindle. Helpfully, the operator may carry the tag holder while working with his hands free and he can easily extract one tag with a tool, for example a pincer, with one hand and the other hand free. Expediently, the tag holder is easily and quickly rechargeable with a plurality of tags, substantially with one single operation of recharge, consisting in fitting a tape already wrapped with a plurality of attached tags on the spindle of the casing.

## Claims

1. Animal ear tag holder (1) comprising a casing (2) for stocking a plurality of tags (9) which are detachably fixed onto a tape (5), a framed window (3) arranged to frame a tag extracted from the casing for detaching from the tape, and a fasten block (4) coupled to the framed window (3) to form a slot (26), intended to receive the tape for a guided extraction from the casing, said framed window further forming a guide (3g) for a tool (10) for detaching and picking said tag from the tape.

2. Animal ear tag holder (1) according to claim 1, wherein said fasten block (4) forms, at a middle height of said framed window (3), a stop element arranged to retain a central portion of said tag to be detached while counter posed terminal portions (9a, 9b) of the tag are pushed from arms (10a, 10b) of said tools, inserted through the framed window to engage said terminal portions (9a, 9b).

3. Animal ear tag holder (1) according to claim 1, wherein the framed window is associated to an outer and opened portion (25) of the casing, a first frame side (31) of said window is spaced from the fasten block (4) to form the slot (26) for receiving the tape together with a tag to be detached, when an end (5d, 5c) of the tape is pulled out from the casing, and a second frame side (32) forms a holding block (3a) with the fasten block (4), holding the end (5d, 5c) of the tape so that said tag to be detached is arranged within the framed window.

4. Animal ear tag holder (1) according to claim 3, wherein the holding block (3a) is formed with a thickening of said second frame side (32), said thickening also forming an indexing stop to centrally align the tag in the window.

5. Animal ear tag holder (1) according to claim 3, wherein the casing is a substantially cylindrical box having a top aperture (22) for receiving the tape with the tags for recharge, and comprises a spindle (21) around which said tape is rolled up or on which said tape is fitted already rolled, wherein the framed window and the fasten block project outside a lateral surface (27) of the box delimiting said outer and opened portion (25).

6. Animal ear tag holder (1) according to claim 5, wherein the lateral surface (27) comprises an opened lateral portion (28) towards the top aperture (22) of the box, for facilitating an introduction of the end of the tape within the slot (26), once the tape is inserted in the casing.

7. Animal ear tag holder (1) according to claim 5, wherein said fasten block is formed on or fixed to said lateral surface (27), preferably radially projecting outside a portion (27') of said lateral surface (27) which is below the opened lateral portion (28).

8. Animal ear tag holder (1) according to claim 5, wherein at least an internal portion (25a) of the casing which ends in the outer and opened portion (25) is more curved than the remaining portion of the cylindrical box, in order to guide the tape within the slot, when pulled.

9. Animal ear tag holder (1) according to any of the preceding claims, including two separate framed windows (3, 311) to receive the tape, respectively, for a clockwise or counter clockwise extraction from the casing, said separate windows being preferably overlooking and associate to the same fasten block.

10. Animal ear tag holder (1) according to claims 9, wherein the two separate frame windows are spaced at a predetermined distance one from the other, said distance being preferably at least equal to half a length of the tag, so that the tool may be inserted through any one of the counter posed apertures (35, 36) of the windows to bent the tag around the central portion, pushing the arms on the counter posed terminal portions of the tag while the central portion curves around the block, said distance being more preferably realized with a spacer corresponding to said fasten block.

11. Animal ear tag holder (1) according to any of the preceding claims, comprising a belt (15) connected to the casing and having ending portions (15a, 15b) to be connected for wearing the tag holder (1).

12. Animal ear tag holder (1) according to any of the preceding claims, wherein more than one casing are stacked and associated to respective framed windows and fasten blocks for a guided extraction of more than one corresponding tape attaching a corresponding plurality of tags, preferably each tape attaching a distinguished type of tags.

13. Animal ear tags assembly, comprising a tag holder according to any of the previous claims, a tape detachably fixing a plurality of tags and a tool for detaching the tags from the tape, arms of said tools having substantially a same size of the window.

14. Animal ear tags assembly according to claim 13, wherein the tape is wrapped on said spindle on a plurality of coils and an end of the tape free from tags is inserted within said slot.

15. Animal ear tags assembly according to claim 13, wherein the tags are attached to the tape with an adhesive coupling or a mechanical coupling.

## Patentansprüche

1. Tierohrmarkenhalter (1) umfassend eine Aufnahme (2) zum Vorhalten einer Vielzahl von Marken/Öhrmarken (9), die lösbar an einem Band (5) fixiert sind, ein Umrahmungsfenster (3), das dazu eingerichtet ist, eine Ohrmarke zu umrahmen, die aus der Aufnahme zum Ablösen vom Band herausgezogen wird, und einen Befestigungsblock (4), der mit dem Umrahmungsfenster (3) zur Bildung eines Schlitzes (26) verbunden ist, der dazu bestimmt ist, das Band für ein geführtes Herausziehen aus der Aufnahme aufzunehmen, wobei das Umrahmungsfenster darüber hinaus eine Führung (3g) für ein Werkzeug (10) zum Ablösen der Ohrmarke vom Band und Ergreifen derselben bildet.

2. Tierohrmarkenhalter (1) nach Anspruch 1, wobei der Befestigungsblock (4) auf einer mittleren Höhe des Umrahrüungsfensters (3) ein Stoppelement bildet, das dazu eingerichtet ist, einen mittleren Abschnitt der abzulösenden Ohrmarke zu halten, während entgegengesetzte Endabschnitte (9a, 9b) der Ohrmarke von Armen (10a, 10b) des Werkzeugs mit einer Schubkraft beaufschlagt werden, das durch das Umrahmungsfenster eingeführt wird, um an den Endabschnitten (9a, 9b) anzugreifen.

3. Tierohrmarkenhalter (1) nach Anspruch 1, wobei das Umrahmungsfenster einem äußeren und offenen Abschnitt (25) der Aufnahme zugeordnet ist, eine erste Rahmenseite (31) des Fensters vom Befestigungsblock (4) beabstandet ist, um den Schlitz (26) zur Aufnahme des Bandes zusammen mit einer abzulösenden Ohrmarke zu bilden, wenn ein Ende (5d, 5c) des Bandes aus der Aufnahme gezogen wird, und eine zweite Rahmenseite (32) mit dem Befestigungsblock (4) einen Halteblock (3a) bildet, wobei das Ende (5d, 5c) des Bandes so gehalten wird, dass die abzulösende Ohrmarke innerhalb des Umrahmungsfensters angeordnet ist.

4. Tierohrmarkenhalter (1) nach Anspruch 3, wobei der Halteblock (3a) mit einer Verdickung der zweiten Rahmenseite (32) gebildet ist, wobei die Verdickung auch einen Indexierungsstopp zur mittigen Ausrichtung der Ohrmarke im Fenster bildet.

5. Tierohrmarkenhalter (1) nach Anspruch 3, wobei die Aufnahme zu Wiederbeschickungszwecken ein im Wesentlichen zylindrisches Behältnis mit einer oberen Öffnung (22) zur Aufnahme des Bandes mit den Ohrmarken ist, und eine Spindel (21) aufweist, um die das Band aufgerollt wird oder auf der das bereits aufgerollte Band aufgesteckt wird, wobei das Umrahmungsfenster und der Befestigungsblock über eine Seitenfläche (27) des Behältnisses nach außen vorsteht, das den äußeren und geöffneten Abschnitt (25) begrenzt.

6. Tierohrmarkenhalter (1) nach Anspruch 5, wobei die Seitenfläche (27) einen zur oberen Öffnung (22) des Behältnisses offenen Seitenabschnitt (28) aufweist, um das Einführen des Endes des Bandes in den Schlitz (26) zu erleichtern, sobald das Band in die Aufnahme eingesetzt ist.

7. Tierohrmarkenhalter (1) nach Anspruch 5, wobei der Befestigungsblock (4) an der Seitenfläche (27) angeformt oder an dieser fixiert ist, wobei vorzugsweise ein Abschnitt (27') der Seitenfläche (27) radial nach außen vorsteht, der sich unter dem offenen Seitenabschnitt (28) befindet.

8. Tierohrmarkenhalter (1) nach Anspruch 5, wobei zumindest ein Innenabschnitt (25a) der Aufnahme, der im äußeren und offenen Abschnitt (25) endet, eine stärkere Krümmung hat als der restliche Abschnitt des zylindrischen Behältnisses, um das Band im Schlitz zu führen, wenn daran gezogen wird.

9. Tierohrmarkenhalter (1) nach einem der vorhergehenden Ansprüche, mit zwei separaten Umrahmungsfenstern (3, 311) zur jeweiligen Aufnahme eines Bandes für ein im Uhrzeigersinn bzw. gegen den Uhrzeigersinn erfolgendes Herausziehen aus der Aufnahme, wobei die separaten Fenster vorzugsweise fluchten und demselben Befestigungsblock zugeordnet sind.

10. Tierohrmarkenhalter (1) nach Anspruch 9, wobei die beiden separaten Umrahmungsfenster mit einem vorbestimmten Abstand voneinander beabstandet sind, wobei dieser Abstand vorzugsweise mindestens die halbe Länge der Ohrmarke beträgt, so dass das Werkzeug durch eine beliebige der entgegengesetzten Öffnungen (35, 36) der Fenster eingeführt werden kann, um die Ohrmarke um den mittigen Abschnitt zu biegen, wobei die Arme auf die entgegengesetzten Endabschnitte der Ohrmarke drücken, während sich der mittige Abschnitt um den Block krümmt, wobei dieser Abstand noch bevorzugter mittels eines dem Befestigungsblock entsprechenden Abstandshalters erzielt wird.

11. Tierohrmarkenhalter (1) nach einem der vorhergehenden Ansprüche, mit einem Gurt (15), der mit der Aufnahme verbunden ist und Endbereiche (15a, 15b) aufweist, die zum Tragen des Ohrmarkenhalters (1) zu verbinden sind.

12. Tierohrmarkenhalter (1) nach einem der vorhergehenden Ansprüche, wobei mehrere Aufnahmen übereinandergestapelt sind und jeweiligen Umrahm-ungsfenstern und Befestigungsblöcken zugeordnet sind, für ein geführtes Herausziehen von mehr als einem entsprechenden Band, an dem eine entsprechende Vielzahl von Ohrmarken angebracht sind, wobei an jedem Band vorzugsweise eine eigene Art von Ohrmarken angebracht ist.

13. Tierohrmarkenbaugruppe umfassend einen Ohrmarkenhalter nach einem der vorhergehenden Ansprüche, ein Band, an dem lösbar eine Vielzahl von Ohrmarken angebracht sind, und ein Werkzeug zum Ablösen der Ohrmarken vom Band, wobei Arme des Werkzeugs im Wesentlichen dieselbe Größe wie das Fenster haben.

14. Tierohrmarkenbaugruppe nach Anspruch 13, wobei das Band auf der Spindel auf mehreren Spulen aufgewickelt ist und ein Ende des Bandes, das keine Ohrmarken trägt, in den Schlitz eingeführt wird.

15. Tierohrmarkenbaugruppe nach Anspruch 13, wobei die Ohrmarken am Band mittels einer Haftverbindung oder einer mechanischen Verbindung angebracht sind.

## Revendications

1. Support pour étiquettes d'oreilles pour animaux (1) comprenant un logement (2) destiné à stocker une pluralité d'étiquettes (9) lesquelles sont fixées de manière amovible sur une bande (5), une fenêtre à cadre (3) agencée pour encadrer une étiquette extraite hors du logement en vue de la détacher de la bande, et un bloc attaché (4) couplé à la fenêtre à cadre (3) pour former une fente (26), prévue pour recevoir la bande en vue d'une extraction guidée hors du logement, ladite fenêtre à cadre formant en outre un guide (3 g) pour un outil (10) destiné à détacher et à prélever ladite étiquette de la bande.

2. Support pour étiquettes d'oreilles pour animaux (1) selon la revendication 1, dans lequel ledit bloc attaché (4) forme, à mi-hauteur de ladite fenêtre à cadre (3), un élément de butée agencé afin de retenir une partie centrale de ladite étiquette devant être détachée tandis que des parties terminales positionnées de manière opposée (9a, 9b) de l'étiquette sont poussées depuis des bras (10a, 10b) desdits outils, insérés à travers la fenêtre à cadre afin de s'engager avec lesdites parties terminales (9a, 9b).

3. Support pour étiquettes d'oreilles pour animaux (1) selon la revendication 1, dans lequel la fenêtre à cadre est associée à une partie extérieure et ouverte (25) du logement, un premier côté de cadre (31) de ladite fenêtre est écarté du bloc attaché (4) afin de former la fente (26) destinée à recevoir la bande avec une étiquette devant être détachée, lorsqu'une extrémité (5d, 5c) de la bande est tirée hors du logement, et un deuxième côté de cadre (32) forme un bloc de maintien (3a) avec le bloc attaché (4), maintenant l'extrémité (5d, 5c) de la bande de sorte que ladite étiquette devant être détachée est agencée à l'intérieur de la fenêtre à cadre.

4. Support pour étiquettes d'oreilles pour animaux (1) selon la revendication 3, dans lequel le bloc de maintien (3a) est formé avec une épaisseur dudit deuxième côté de cadre (32), ladite épaisseur formant également une butée d'indexage pour aligner centralement l'étiquette dans la fenêtre.

5. Support pour étiquettes d'oreilles pour animaux (1) selon la revendication 3, dans lequel le logement est une boîte globalement cylindrique présentant une ouverture supérieure (22) destinée à recevoir la bande avec les étiquettes en vue d'une recharge, et comprend une broche (21) autour de laquelle ladite bande est enroulée ou sur laquelle ladite bande est installée en étant déjà enroulée, où la fenêtre à cadre et le bloc attaché dépassent à l'extérieur d'une surface latérale (27) de la boîte délimitant ladite partie extérieure et ouverte (25).

6. Support pour étiquettes d'oreilles pour animaux (1) selon la revendication 5, dans lequel la surface latérale (27) comprend une partie latérale ouverte (28) en direction de l'ouverture supérieure (22) de la boîte, destinée à faciliter une introduction de l'extrémité de la bande à l'intérieur de la fente (26), une fois que la bande est insérée dans le logement.

7. Support pour étiquettes d'oreilles pour animaux (1) selon la revendication 5, dans lequel ledit bloc attaché est formé sur ou est fixé à ladite surface latérale (27), de préférence en dépassant radialement à l'extérieur d'une partie (27') de ladite surface latérale (27), laquelle se trouve en dessous de la partie latérale ouverte (28).

8. Support pour étiquettes d'oreilles pour animaux (1) selon la revendication 5, dans lequel au moins une partie interne (25a) du logement, laquelle se termine dans la partie extérieure et ouverte (25), est davantage incurvée que la partie restante de la boîte cylindrique, de manière à guider la bande à l'intérieur de la fente, lorsque celle-ci est tirée.

9. Support pour étiquettes d'oreilles pour animaux (1) selon l'une quelconque des revendications précédentes, incluant deux fenêtres à cadres distinctes (3, 311) afin de recevoir la bande, respectivement, pour une extraction hors du logement dans le sens des aiguilles d'une montre ou dans le sens inverse des aiguilles d'une montre, lesdites fenêtres distinctes de préférence donnant sur le même, et étant associées au même, bloc attaché.

10. Support pour étiquettes d'oreilles pour animaux (1) selon la revendication 9, dans lequel les deux fenêtres à cadres distinctes sont écartées l'une de l'autre d'une distance prédéterminée, ladite distance étant de préférence au moins égale à la moitié d'une longueur de l'étiquette, de sorte que l'outil peut être inséré à travers l'une quelconque des ouvertures positionnées de manière opposée (35, 36) des fenêtres afin de courber l'étiquette autour de la partie centrale, en poussant les bras sur les parties terminales positionnées de manière opposée de l'étiquette tandis que la partie centrale se courbe autour du bloc, ladite distance étant de façon davantage préférée réalisée avec un élément d'espacement correspondant audit bloc attaché.

11. Support pour étiquettes d'oreilles pour animaux (1) selon l'une quelconque des revendications précédentes, comprenant une courroie (15) reliée au logement et ayant des parties d'extrémité (15a, 15b) devant être reliées pour supporter le support pour étiquettes (1).

12. Support pour étiquettes d'oreilles pour animaux (1) selon l'une quelconque des revendications précédentes, dans lequel plusieurs logements sont empilés et associés à des fenêtres à cadres et à des blocs attachés respectifs en vue d'une extraction guidée de plusieurs bandes correspondantes attachant une pluralité correspondante d'étiquettes, chaque bande attachant de préférence un type distinct d'étiquettes.

13. Ensemble pour étiquettes d'oreilles pour animaux, comprenant un support pour étiquettes selon l'une quelconque des revendications précédentes, une bande fixant de manière amovible une pluralité d'étiquettes et un outil destiné à détacher les étiquettes de la bande, des bras desdits outils ayant substantiellement la même taille que la fenêtre.

14. Ensemble pour étiquettes d'oreilles pour animaux selon la revendication 13, dans lequel la bande est enroulée sur ladite broche sur une pluralité de bobines et une extrémité de la bande sans étiquette est insérée à l'intérieur de ladite fente.

15. Ensemble pour étiquettes d'oreilles pour animaux selon la revendication 13, dans lequel les étiquettes sont attachées sur la bande à l'aide d'un accouplement adhésif ou d'un accouplement mécanique.
